# EUROPEAN PATENT APPLICATION

(11) **EP 2 436 722 A1**
(43) Date of publication of application: **04.04.2012**
(21) Application number: 10780334.8
(22) Date of filing: 25.02.2010
(51) Int. Cl.: C08J 5/18, C08F 20/26

(54) **SELF-SUPPORTING THIN POLYMER FILM**

(30) Priority: 26.05.2009 JP 2009126425
(71) Applicant: Tokyo Institute of Technology, Tokyo 152-8550 (JP)
(72) Inventor: IYODA, Tomokazu, Yokohama-shi Kanagawa 226-8503 (JP); YAMAMOTO, Takashi, Yokohama-shi Kanagawa 223-0061 (JP); ASAOKA, Sadayuki, Kyoto-shi Kyoto 606-0962 (JP); IZUTANI, Tasuku, Kyoto-shi Kyoto 606-0962 (JP)
(74) Representative: Adam, Holger
(86) International application number: PCT/JP2010/053478
(87) International publication number: WO 2010/137374

(57) **Abstract**

[Object] To provide a self-supporting thin polymer membrane having a large surface area, a high strength, and a perpendicularly oriented cylindrical structure, and to provide a method of producing the membrane.

[Solution] The self-supporting thin polymer membrane of the present invention is a self-supporting thin polymer membrane including a block copolymer in which a hydrophilic polymer component and a hydrophobic polymer component having a crosslinkable structure are linked to each other by covalent bonding, and in the self-supporting thin polymer membrane, the hydrophilic polymer component forms unidirectionally oriented cylinders, and the hydrophobic polymer component forms crosslinks. The self-supporting thin polymer membrane of the present invention does not have physical pores but allows a material to selectively permeate the cylindrical portions and can be therefore used as various permeable membranes, ultrafiltration membranes, and nanoreactors.

## Description

### Technical Field

The present invention relates to a self-supporting thin polymer membrane and a method of producing a self-supporting thin polymer membrane, and more specifically relates to a self-supporting thin polymer membrane having a perpendicularly oriented cylindrical structure and a method of producing the membrane.

### Background Art

In recent years, self-supporting thin membranes having large surface areas and nano-order thicknesses have attracted attention because of their possibilities of application to, for example, permselective membranes, microsensors, and drug-delivery membranes. It has been reported that such a thin membrane can be formed by a layer-by-layer (LbL) deposition method (Non-Patent Literature 1), a Langmuir Blodgett (LB) method (Non-Patent Literature 2), or a spin-coating method (Non-Patent Literature 3). In these methods, a sacrificing layer is disposed on a solid substrate, an objective membrane is produced on the sacrificing layer, and then the sacrificing layer is removed using a solvent. Though such a method can produce a self-supporting thin membrane, the procedures of the above-mentioned methods are complicated, and the use of these methods may result in aggregates of microcrystal domains. Thus, the practicability of these methods is not high.

Non-Patent Literatures 4 and 5 disclose methods of producing a self-supporting membrane using a block copolymer. In Non-Patent Literatures 4 and 5, a solid substrate serving as a support for a thin membrane is treated with a strong acid to remove the sacrificing layer. Because of this severe process, it is difficult to obtain a thin membrane having a high strength, and detailed structure evaluation of the resulting self-supporting membrane has not been conducted.

In industrial processes, permeable membranes are used for separation and purification of materials. As such permeable membranes, ultrafiltration membranes and track-etched membranes are widely used because of their high cost effectiveness and easiness in manufacturing. However, the conventionally used permeable membranes show broad pore-size distributions and have low densities and are therefore restricted in practical use.

### Citation List

### Non-Patent Literature

Non-Patent Literature 1: Z. Tang, N.A. Kotov, S. Magonov, and B. Ozturk, Nat. Mater., 2003, 2, 413
Non-Patent Literature 2: H. Endo, M. Mitsuishi, and T. Miyashita, J. Mater. Chem., 2008, 18, 1302
Non-Patent Literature 3: R. Vendamme, S. Onoue, A. Nakao, and T. Kunitake, Nat. Mater., 2006, 5, 494
Non-Patent Literature 4: S.Y. Yang, 1. Ryu, H.Y. Kim, J.K. Kim, S.K. Jang, and T.P. Russell, Adv. Mater., 2006, 18, 709
Non-Patent Literature 5: S.Y. Yang, J. Park, J. Yoon, M. Ree, S.K. Jang, and J.K. Kim, Adv. Funct. Mater., 2008, 18, 1371

### Summary of Invention

### Technical Problem

Accordingly, it is an object of the present invention to provide a self-supporting thin polymer membrane having a large surface area, a high strength, and a perpendicularly oriented cylindrical structure, and to provide a method of producing the membrane.

### Solution to Problem

The present inventors have conducted intensive studies for solving the above-mentioned problems and, as a result, have obtained a finding that the above-mentioned object can be achieved by using a hydrophilic polymer component and a block copolymer having a crosslinkable structure.

The present invention has been accomplished based on the above-mentioned finding and provides a self-supporting thin polymer membrane including a block copolymer in which a hydrophilic polymer component and a hydrophobic polymer component having a crosslinkable structure are linked to each other by covalent bonding. In the self-supporting thin polymer membrane, the hydrophilic polymer component forms unidirectionally oriented cylinders, and the hydrophobic polymer component forms crosslinks.

Examples of the hydrophilic polymer component of the block copolymer include poly(ethylene oxide), poly (propylene oxide), poly(vinylalcohol), poly(acrylicacid), poly(methacrylic acid), poly(acrylamide), poly(acrylate) having a hydrophilic side chain, and poly (methacrylate) having a hydrophilic side chain. Examples of the hydrophobic polymer component include poly (acrylate) and poly (methacrylate) having a mesogenic side chain, polystyrene, and vinyl polymers.

Examples of the copolymer include those represented by the following Formula (1): 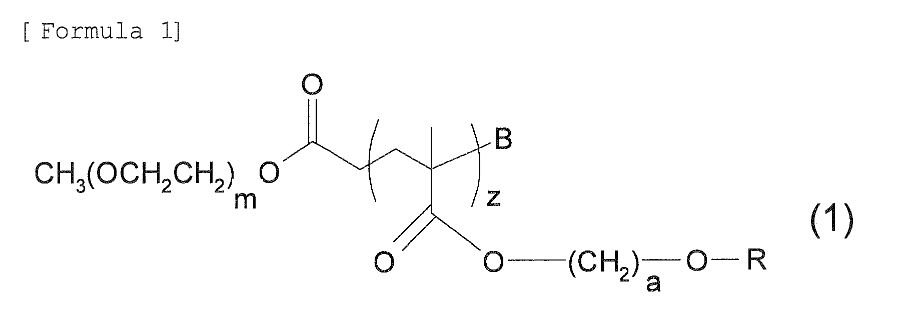 (wherein, m and z may be the same or different and are each an integer of 5 to 500; B represents a halogen atom; a is an integer of 4 to 30; and R represents a liquid-crystalline mesogenic chain).

Examples of the liquid-crystalline mesogenic chain include those represented as follows:

E-(Y¹-F)ₙ-Y²

(wherein, E and F may be the same or different and each represent a divalent aromatic or heterocyclic group optionally having a substituent; Y¹ represents a single bond, -CH₂CH₂-, -CH₂O-, -OCH₂-, -C(=O)O-, -OC(=O)-, -C≡C-, -CH=CH-, -CF=CF-, -(CH₂)₄-, -CH₂CH₂CH₂O-, -OCH₂CH₂CH₂-, -CH=CH-CH₂CH₂-, -CH₂CH₂-CH=CH-, -N=N-, -CH=CH-C(=O)O-, or -OC(=O)-CH=CH-; n is an integer of 1 to 4; and Y² represents a hydrogen atom, a halogen, an alkyl group, an alkoxy group, a cyano group, a mercapto group, a nitro group, or an amino group).

Examples of R in Formula (1) include substituents represented by the following Formula (2), (3), or (4): 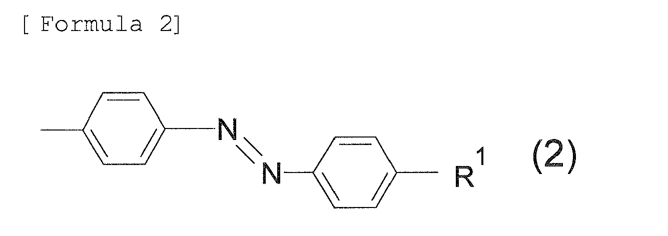 (wherein, R¹ represents a hydrogen atom or an alkyl group having 1 to 22 carbon atoms), 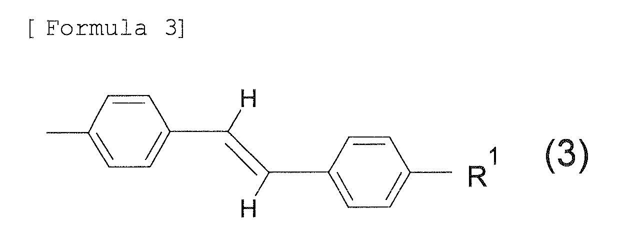 (wherein, R¹ represents a hydrogen atom or an alkyl group having 1 to 22 carbon atoms), 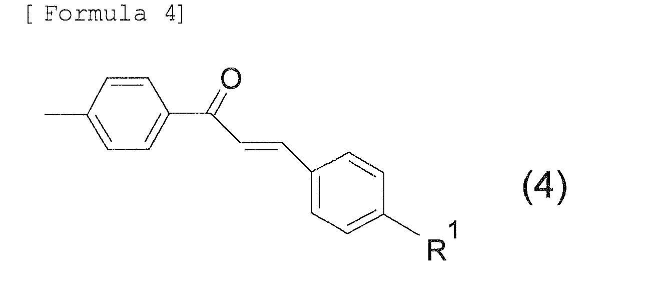 (wherein, R¹ represents a hydrogen atom or an alkyl group having 1 to 22 carbon atoms).

In the self-supporting thin polymer membrane of the present invention, the cylinders are preferably oriented in a direction approximately perpendicular to a surface of the self-supporting thin polymer membrane. The cylinders preferably have a diameter of 1 to 20 nm and are preferably arranged at intervals of 60 nm or less.

The present invention also provides a method of producing a. self-supporting thin polymer membrane. The method includes the steps of forming a sacrificing layer on a substrate; applying a solution of a block copolymer in a solvent that can dissolve the block copolymer onto the substrate provided with the sacrificing layer thereon, wherein the block copolymer is a block copolymer in which a hydrophilic polymer component and a hydrophobic polymer component having a crosslinkable structure are linked to each other by covalent bonding; forming a microphase-separated structure membrane of the block block copolymer by evaporating the solvent; crosslinking the hydrophobic polymer component of the block copolymer; and removing the sacrificing layer.

Examples of the block copolymer used in the method of producing a self-supporting thin polymer membrane of the present invention include those wherein the hydrophilic polymer component is poly(ethylene oxide), poly(propylene oxide), poly(vinyl alcohol), poly(acrylic acid), poly(methacrylic acid), poly(acrylamide), poly(acrylate) having a hydrophilic side chain, or poly(methacrylate) having a hydrophilic side chain; and the hydrophobic polymer component is poly(acrylate) or poly(methacrylate) having a mesogenic side chain, polystyrene, or a vinyl polymer.

Examples of the block copolymer used in the method of producing a self-supporting thin polymer membrane of the present invention include those represented by the following Formula (1): 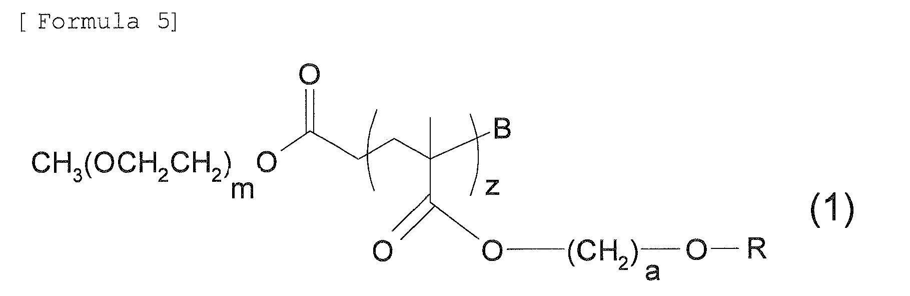 (wherein, m and z may be the same or different and are each an integer of 5 to 500; B represents a halogen atom; a is an integer of 4 to 30; and R represents a liquid-crystalline mesogenic chain).

Examples of the block copolymer used in the method of producing a self-supporting thin polymer membrane of the present invention include those wherein the liquid-crystalline mesogenic chain in Formula (1) below is represented as follows:

E-(Y¹-F)ₙ-Y²

(wherein, E and F may be the same or different and each represent a divalent aromatic or heterocyclic group optionally having a substituent; Y¹ represents a single bond, -CH₂CH₂-, -CH₂O-, -OCH₂-, -C(=O)O-, -OC(=O)-, -C≡C-, -CH=CH-, -CF=CF-, -(CH₂)₄-, -CH₂CH₂CH₂O-, -OCH₂CH₂CH₂-, -CH=CH-CH₂CH₂-, -CH₂CH₂-CH=CH-, -N=N-, -CH=CH-C(=O)O-, or -OC(=O)-CH=CH-; n is an integer of 1 to 4; and Y² represents a hydrogen atom, a halogen, an alkyl group, an alkoxy group, a cyano group, a mercapto group, a nitro group, or an amino group).

Examples of R in the copolymer represented by Formula (1) used in the method of producing a self-supporting thin polymer membrane of the present invention include those represented by the following Formula (2), (3), or (4): 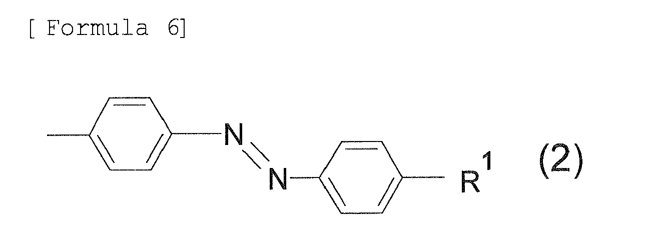 (wherein, R¹ represents a hydrogen atom or an alkyl group having 1 to 22 carbon atoms), 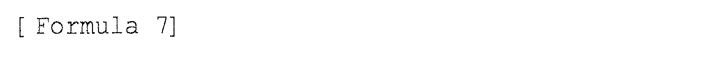 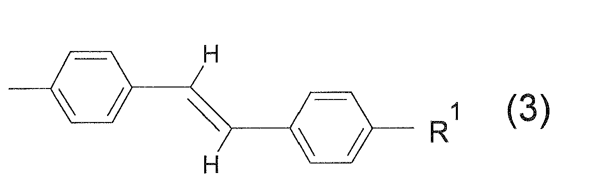 (wherein, R¹ represents a hydrogen atom or an alkyl group having 1 to 22 carbon atoms), 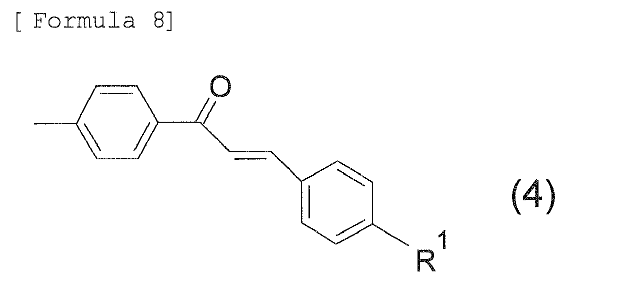 (wherein, R¹ represents a hydrogen atom or an alkyl group having 1 to 22 carbon atoms).

In the method of producing a self-supporting thin polymer membrane of the present invention, the main component of the sacrificing layer may be a polymer that is soluble in an organic solvent, so that the sacrificing layer can be removed using an organic solvent.

### Advantageous Effects of Invention

According to the present invention, a self-supporting thin polymer membrane having a large surface area, a high strength, and a perpendicularly oriented cylindrical structure can be obtained.

### Brief Description of Drawings

[Fig. 1] Fig. 1 is a photograph showing the results of AFM.
[Fig. 2] Fig. 2 is a photograph showing the results of GI-SAXS.
[Fig. 3] Fig. 3 is a photograph showing the results of AFM.
[Fig. 4] Fig. 4 is a photograph showing the results of GI-SAXS.
[Fig. 5] Fig. 5 is a photograph showing the results of AFM.
[Fig. 6] Fig. 6 is a photograph showing the results of AFM.
[Fig. 7] Fig. 7 is a photograph showing the results of GI-SAXS.
[Fig. 8] Fig. 8 is a photograph showing the results of GI-SAXS.
[Fig. 9] Fig. 9 is a graph showing the results of a permeation experiment of a self-supporting polymer.

### Description of Embodiments

The self-supporting thin polymer membrane of the present invention will now be described.

Throughout the specification, the term "self-supporting" refers to that a thin polymer membrane layer maintains the shape of the thin membrane after removal of the substrate.

The self-supporting thin polymer membrane of the present invention includes a block copolymer in which a hydrophilic polymer component and a hydrophobic polymer component having a crosslinkable structure are linked to each other by covalent bonding. In the self-supporting thin polymer membrane, the hydrophilic polymer component forms unidirectionally oriented cylinders, and the hydrophobic polymer component forms crosslinks.

The block copolymer constituting the self-supporting thin polymer membrane of the present invention is a block copolymer in which a hydrophilic polymer component and a hydrophobic polymer component having a crosslinkable structure are covalently bonded to each other. The combination of the hydrophilic polymer component and the hydrophobic polymer component in the block copolymer is not particularly limited as long as they are immiscible with each other and can be phase-separated from each other by dissolving them in an appropriate solvent and then changing the temperature. The block copolymer has a crosslinkable structure in the hydrophobic polymer component. The crosslinkable structure is not particularly limited, and examples thereof include polymers having mesogenic chains in the molecules thereof as described below.

Examples of the hydrophilic polymer component of the block copolymer constituting the self-supporting thin polymer membrane of the present invention include poly(ethylene oxide), poly (propylene oxide), poly(vinyl alcohol), poly(acrylic acid), poly (methacrylic acid), poly(acrylamide), poly(acrylate) having a hydrophilic side chain, and poly(methacrylate) having a hydrophilic side chain.

The hydrophobic polymer component is not particularly limited as long as a combination thereof with the hydrophilic polymer component can be phase-separated from each other by dissolving them in an appropriate solvent and then changing the temperature, as described above, and examples thereof include poly(acrylate) and poly(methacrylate) having a mesogenic side chain, polystyrene, and vinyl polymers.

Examples of the mesogenic side chain include those having at least one structural unit represented by the following Formula:

E-(Y¹-F)ₙ-Y²

wherein, E and F may be the same or different and each represent a divalent aromatic or heterocyclic group optionally having a substituent; Y¹ represents a single bond, -CH₂CH₂-, -CH₂O-, -OCH₂-, -C(=O)O-, -OC(=O)-, -C=C-, -CH=CH-, -CF=CF-, -(CH₂)4-, -CH₂CH₂CH₂O-, -OCH₂CH₂CH₂-, -CH=CH-CH₂CH₂-, -CH₂CH₂-CH=CH-, -N=N-, -CH=CH-C(=O)O-, or -OC(=O)-CH=CH-; n is an integer of 1 to 4;
and Y² represents a hydrogen atom, a halogen, an alkyl group, an alkoxy group, a cyano group, a mercapto group, a nitro group, or an amino group. Specific examples of the aromatic or heterocyclic group represented by E or F include 1,4-phenylene, 1,4-cyclohexylene, 1,4-cyclohexenylene, naphthalene-2,6-diyl, decahydronaphthalene-2,6-diyl, 1,2,3,4-tetrahydronaphthalene-2,6-diyl, 1,4-bicyclo[2.2.2]octylene, 1,3-dioxane-2,5-diyl, pyridine-2,5-diyl, pyrazine-2,5-diyl, pyridazine-3,6-diyl, and pyrimidine-2,5-diyl.

The block copolymer constituting the self-supporting thin polymer membrane of the present invention is preferably, for example, a copolymer represented by the following Formula (1): 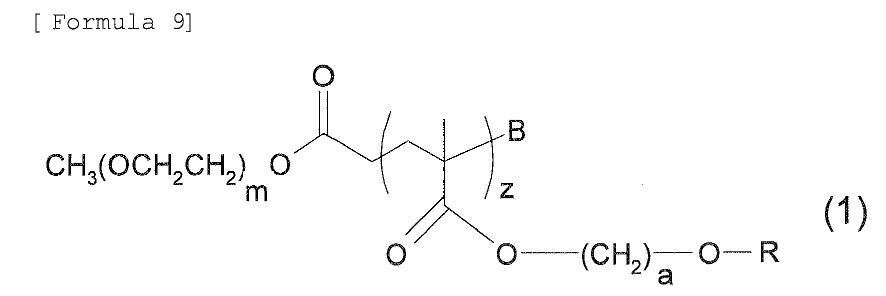 wherein, m and z may be different from each other and are each an integer of 5 to 500, preferably 40 to 120. The diameters and the intervals of cylinders of the resulting self-supporting thin polymer membrane can be adjusted bv regulating the ratio between m and z. In the formula, a is an integer of 4 to 30, preferably 6 to 12; and B represents a halogen atom, preferably a chlorine atom or a bromine atom.

The volume fraction of the hydrophilic polymer component in the block copolymer is preferably 10 to 90%, more preferably 10 to 50%. The self-supporting thin polymer membrane of the present invention has a perpendicularly oriented hexagonal close-packed cylinder array-type phase-separated structure. In this cylinder array-type phase-separated structure membrane, as described above, the hydrophilic polymer component forms the cylindrical portions, and the hydrophobic polymer component forms other portions. Accordingly, the sizes (diameters) and the intervals of the cylindrical structure portions can be altered by changing the volume fraction of the hydrophilic polymer component. That is, a reduction in the sizes or an increase in the intervals of the cylindrical structure portions can be achieved by decreasing the volume fraction of the hydrophilic polymer component, and an increase in the sizes or a reduction in the intervals of the cylindrical portions can be achieved by increasing the volume fraction of the hydrophilic polymer component. The volume fraction of the hydrophilic polymer component is preferably changed within a range of 10 to 90%. If the volume fraction of the hydrophilic polymer component is less than 10%, it may be difficult to generate the cylinder array-type phase-separated structure so as to be perpendicularly oriented, because of the low ratio of the cylindrical portions. On the other hand, if the volume fraction is higher than 90%, it may be difficult to generate the cylinder array-type phase-separated structure so as to be perpendicularly oriented, because of the high ratio of the cylindrical portions.

The size of the cylindrical structure is not particularly limited, but, for example, the cylinder preferably has a diameter of 1 to 10 nm, more preferably 1 to 3 nm. The interval between adjacent cylinders is 60 nm or less, preferably 10 to 50 nm, and more preferably 15 to 40 nm.

The degree of polymerization of the hydrophilic polymer component is preferably 5 to 500, more preferably 40 to 120. If the degree of polymerization of the hydrophilic polymer component is less than 5, a microphase-separated structure is not formed, and thereby a thin polymer membrane not having a cylindrical structure may be obtained; or even if the structure is formed, the formation may highly depend on the degree of polymerization of the hydrophobic polymer component. On the other hand, if the degree of polymerization is higher than 500, the microphase-separated structure is not formed, and thereby a thin polymer membrane not having a cylindrical structure may not be obtained; or even if the structure is formed, the formation may highly depend on the degree of polymerization of the hydrophobic polymer component. Accordingly, the degree of polymerization of the hydrophilic polymer component is preferably within the above-mentioned range.

In Formula (1), examples of R include substituents represented by the following Formula (2), (3), or (4): 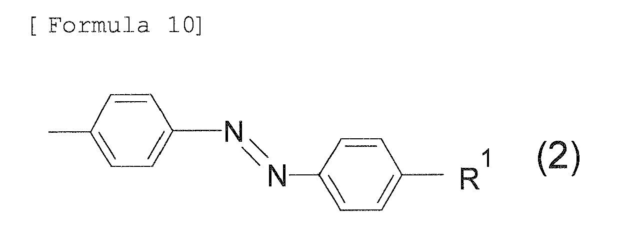 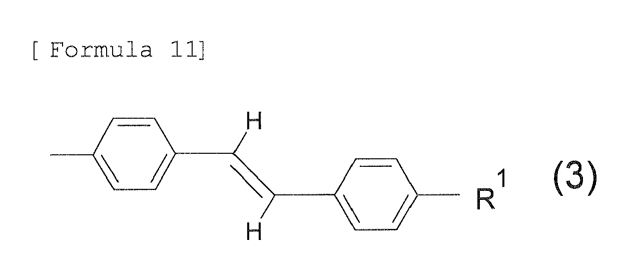 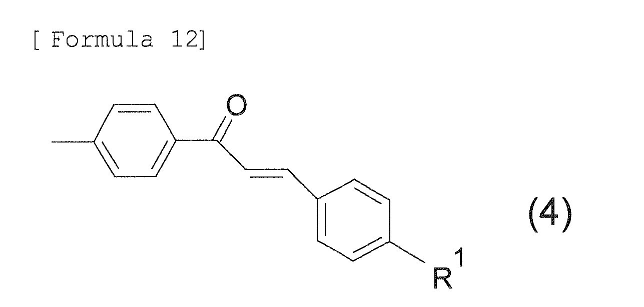 in Formulae (2), (3), and (4), R¹ is hydrogen or an alkyl group having 1 to 22 carbon atoms, preferably an alkyl group having 4 to 12 carbon atoms.

The block copolymer represented by Formula (1) preferably has a molecular weight of 5,000 to 100,000, more preferably 10,000 to 50,000.

The molecular weight distribution (Mw/Mn) of the block copolymer constituting the self-supporting thin polymer membrane of the present invention is preferably 1.4 or less, more preferably 1.3 or less. Note that, throughout the specification, the molecular weight distribution (Mw/Mn) is calculated from a weight-average molecular weight Mw and a number-average molecular weight Mn measured in terms of polystyrene by gel permeation chromatography (GPC).

A specific method of the measurement is, for example, as follows:
A gel permeation chromatography column (trade name: TSKgel HXL-M) manufactured by Tosoh Corporation is set to a high-performance liquid chromatographic device, and molecular weight is measured using tetrahydrofuran as an eluent. First, polystyrene having a known average molecular weight is subjected to the measurement as a standard sample. The elution time of a measurement sample is compared to the elution time of the polystyrene to calculate the weight-average molecular weight Mw and the number-average molecular weight Mn in terms of polystyrene. Then, the molecular weight distribution is determined.

The method of producing the block copolymer constituting the self-supporting thin polymer membrane of the present invention is not particularly limited, but living polymerization is preferred from the viewpoint of capability of controlling the molecular weight and the structure of the resulting block copolymer, and atom transfer radical polymerization (ATRP) is particularly preferred from the viewpoint of capability of readily producing the copolymer.

In the atom transfer radical polymerization, an organic halide or a halogenated sulfonyl compound is used as an initiator, and a metal complex having an element of Group 8, 9, 10, or 11 in the periodic table as a central metal is used as a catalyst.

In these methods, usually, the polymerization rate is very high, and though they are radical polymerization, which readily causes a termination reaction such as coupling between radicals, the polymerization livingly proceeds to give a block copolymer having a narrow molecular weight distribution, and also the molecular weight can be freely regulated by controlling the loading ratio between the monomers and the initiator.

In the ATRP method, a complex of a transition metal X is used as a catalyst for atom transfer radical polymerization, and a metal complex having a transition metal of Group 8, 9, 10, or 11 in the periodic table as a central metal is used as the catalyst. Preferred examples thereof include complexes of monovalent or zero-valent copper, divalent ruthenium, divalent iron, and divalent nickel. In particular, copper complexes are preferred from the viewpoints of cost performance and reaction control. Examples of the monovalent copper compound include copper(I) chloride, copper(I) bromide, copper(I) iodide, copper(I) cyanide, copper(I) oxide, and copper(I) perchlorate. In particular, copper(I) chloride and copper(I) bromide are preferred from the viewpoint of polymerization control. Examples of the divalent ruthenium include (cumene)dichlororuthenium dimer and tris(triphenylphosphine)ruthenium dichloride.

When a monovalent copper compound is used, a ligand may be simultaneously used in order to enhance the catalyst activity. Examples of the ligand include trioctylamine, triethylamine, 2,2'-bipyridyl and its derivatives (e.g., 4,4'-dinolyl-2,2'-bipyri-dyl and 4,4' -di(5-nolyl)-2,2' -bipyridyl), 1,10-phenanthroline and its derivatives (e.g., 4,7- dinolyl-1-,10-phenanthroline and 5,6-dinolyl-1,10-phenanthroline), and polyamines such as tetramethylethylenediamine (TMEDA), pentamethyldiethylenetriamine, and hexamethyl (2-aminoethyl) amine.

The ATRP method can be conducted in the absence of solvents (bulk polymerization) or in the presence of various solvents. Examples of the solvent include hydrocarbon solvents, halogenated aromatic hydrocarbon solvents, ketone solvents, alcohol solvents, nitrile solvents, and ester solvents. These may be used alone or as a mixture of two or more. Preferred solvents are, for example, dichlorobenzene and anisole.

The ATRP method can be usually performed at a temperature of about room temperature (20°C) to about 120°C and is preferably performed at a temperature of about 20°C to about 120°C. A polymerization temperature of lower than this temperature range may increase the viscosity of the reaction system to cause too low reaction rate. If the temperature is higher than this temperature range, inexpensive polymerization solvents cannot be used.

Examples of the method of producing the block copolymer by the ATRP method include a method in which a monomer is successively added, a method in which a polymer synthesized in advance is used as a polymeric initiator for polymerizing the subsequent block, and a method in which separately polymerized polymers are reacted and are thereby linked. These methods can be appropriately selected depending on a purpose, but the method in which a polymer synthesized in advance is used as a polymeric initiator for polymerizing the subsequent block is preferred from the viewpoint of simpleness of polymerization process.

In the self-supporting thin polymer membrane of the present invention, the hydrophilic polymer component forms unidirectionally oriented cylinders, and the hydrophobic polymer component forms crosslinks.

The cylindrical structure is preferably oriented in a direction approximately perpendicular to the surface of the self-supporting thin polymer membrane. The method for orienting the cylindrical structure in the direction approximately perpendicular to the surface of the self-supporting thin polymer membrane is described below. Roughly, the block copolymer is dissolved in a solvent, and a film of the block copolymer is formed on a substrate. Consequently, a microphase-separated structure is formed by repulsive interaction between the hydrophilic polymer portion and the hydrophobic polymer portion. This microphase-separated structure becomes a hexagonal close-packed cylinder array-type phase-separated structure in which the hydrophilic cylinders are oriented in a direction approximately perpendicular to the surface of the membrane. In this cylinder array-type phase-separated structure membrane, the hydrophilic polymer component forms the cylindrical portions, and the hydrophobic polymer portion forms other portions. Accordingly, as described above, the sizes and the intervals of the cylindrical portions can be altered by changing the volume fraction ratio between the hydrophilic polymer and the hydrophobic polymer.

In the self-supporting thin polymer membrane of the present invention, the hydrophobic polymer portions of the copolymer constituting the membrane forms crosslinks. As an example, the crosslinks are formed by photodimerization. Here, the photodimerization refers to a reaction of polymerizing two molecules by radical polymerization by light irradiation. For example, the copolymer represented by Formula (1) has a mesogenic moiety, and this mesogenic structure portion possesses face-to-face orientation. Consequently, the photodimerization probably readily proceeds by irradiation with ionizing radiation such as ultraviolet rays, electron rays, X-rays, α-rays, or γ-rays. The conditions for the photodimerization are described below. A thin membrane maintaining the shape of the microphase-separated structure during the production process described below can be prepared by crosslinking the hydrophobic polymer component in the copolymer as described above, enabling production of the self-supporting thin polymer membrane.

A method of producing the self-supporting thin polymer membrane of the present invention will now be described.

The method of producing the self-supporting thin polymer membrane of the present invention includes the steps of:
forming a sacrificing layer on a substrate;
applying a solution of a block copolymer in a solvent that can dissolve the block copolymer onto the substrate provided with the sacrificing layer thereon, wherein the block copolymer is a block copolymer in which a hydrophilic polymer component and a hydrophobic polymer component having a crosslinkable structure are linked to each other by covalent bonding;
forming a microphase-separated structure membrane of the block copolymer by evaporating the solvent;
photocrosslinking the hydrophobic polymer component of the block copolymer; and
removing the sacrificing layer.

The substrate is preferably a hydrophobic substrate or a substrate having a hydrophobized surface. Preferred examples of such a substrate include substrates of polyester or polyimide, mica plates, silicon wafers, quartz plates, and glass plates and substrates having surfaces subjected to hydrophobization treatment such as carbon evaporation or silylation. The thickness of the substrate used in this occasion is not particularly limited.

The sacrificing layer may be formed by any method that does not impair the self-supporting thin polymer membrane of the present invention. It is preferable to dissolve only the sacrificing layer without dissolving the self-supporting thin polymer membrane of the present invention. Here, a sacrificing layer of which main component is a polymer that is soluble in an organic solvent can be removed using an organic solvent and is therefore advantageous. The self-supporting thin polymer membrane of the present invention has a crosslinked structure as described above and, advantageously, is not dissolved and not impaired in an organic solvent.

As the polymer for forming the sacrificing layer, for example, cellulose acetate, poly(vinyl alcohol), poly(acrylic acid), poly(4-vinylphenol), or polystyrene can be used. The molecular weight of the polymer is not particularly limited, but is usually about 30,000 in the case of poly (cellulose acetate), about 220,000 in the case of poly(vinyl alcohol), about 450,000 in the case of poly(acrylic acid), about 8,000 in the case of poly (4-vinylphenol), and about 280,000 in the case of polystyrene. The sacrificing layer can be formed by, for example, dissolving the above-mentioned polymer in an organic solvent that can dissolve the polymer and spin-coating the resulting solution onto a substrate. Examples of the organic solvent include acetone, water, and ethanol, but any organic solvent that can dissolve the polymer as the main component of the sacrificing layer can be used, and a mixture of two or more of organic solvents can also be used.

After spin-coating of the polymer solution for forming the sacrificing layer onto the substrate, the organic solvent may be evaporated by heating. The heating temperature is not particularly limited as long as the organic solvent evaporates.

After formation of the sacrificing layer, a solution of a block copolymer in a solvent is applied onto the substrate provided with the sacrificing layer thereon, wherein the block copolymer is a block copolymer in which a hydrophilic polymer component and a hydrophobic polymer component having a crosslinkable structure are linked to each other by covalent bonding, and the solvent can dissolve the block copolymer. For example, the block copolymer described above is used here.

Any solvent that can dissolve the block copolymer can be used as the solvent for dissolving the block copolymer to prepare the block copolymer solution, and examples thereof include benzene, toluene, xylene, chloroform, dichloromethane, tetrahydrofuran, 1,4-dioxane, carbon tetrachloride, ethylbenzene, propylbenzene, ethylene dichloride, methyl chloride, and mixtures thereof. The concentration of the block copolymer in the solution is preferably about 0.1 to 5% by mass. When the block copolymer is hardly dissolved, for example, stirring or heating may be performed.

The block copolymer solution may be applied to the substrate provided with the sacrificing layer by any method, such as spin coating, casting, dipping, or bar coating. The coating amount is not particularly limited, but is usually an amount to give a membrane thickness of about 30 nm to about 10 µm and is preferably about 0.002 to 0.1 mL per 1 cm² of the substrate.

Subsequently, a microphase-separated structure membrane of the block copolymer is formed by evaporating the solvent. For example, the solvent can be evaporated by heating the substrate. In the case of heating the substrate, the heating temperature is preferably higher than the temperature that is lower than the liquid crystal phase transition temperature of the block copolymer by 10°C. In addition, the heating temperature is preferably lower than the decomposition temperature of the block copolymer. The heating temperature within the above-mentioned range can ensure sufficient fluidity of the polymer to form a phase-separated structure and is therefore preferred.

The orientation treatment may be performed by applying an electric field of 1 × 10⁵ to 3 × 10⁷ V/m, preferably 1 × 10⁵ to 3 × 10⁶ V/m, with warming. Since the block copolymer is oriented along the electric field, the block copolymer can be oriented by applying an electric field in a desired direction. For example, the orientation of the phase-separated structure can be controlled in a region-selective manner by using a micro comb-shaped electrode or using a micro electrode for applying a voltage by bringing it close to an electrode covered with the polymer. In particular, molecules oriented in a direction approximately perpendicular to a substrate form a cylindrical structure so as to be perpendicular to the substrate and are therefore highly useful. Therefore, it is preferable to orient the block copolymer so as to be approximately perpendicular to a substrate by applying an electric field in a direction approximately perpendicular to the substrate.

The electric field may be constant within a range of 1 × 10⁵ to 3 × 10⁷ V/m and may be in either direction of (+) or (-). Alternatively, the electric fieldmaybe swept in the (+) direction, the (-) direction, or both directions alternately (specifically, sweeping the electric potential to be applied) with controlling the electric field not to exceed an upper limit of 1 × 10⁵ to 3 × 10⁷ V/m. The further clear orientation can be achieved by alternately changing the direction of the electric field, and such application is therefore preferred.

The method for applying an electric field is not particularly limited, and a conventionally known method can be used. In an example of a simple method, a film is formed using a substrate as an electrode, an electrolyte is applied onto the film, and a desired voltage is applied between the electrode substrate and the electrolyte.

Any electrically conductive electrode material can be used as the electrode substrate. For example, a metal plate of platinum, stainless steel, or gold or a graphite- or indium tin oxide-covered glass, plastic film, or silicon wafer can be used. As the electrolyte, water or an organic solvent, such as tetrahydrofuran, chloroform, dimethyl sulfoxide, or dimethylformamide, is used as the solvent, and, in this solvent, an electrolyte, such as potassium chloride, sodium chloride, potassium bromide, sodium sulfate, sodium perchlorate, or sodium nitrate, is dissolved as a solute.

In the thus-prepared microphase-separated structure membrane, a hexagonal close-packed cylindrical structure, which is a structure composed of periodically separated nanometer order regions, is formed. The cylindrical structure (constituted of the hydrophilic polymer component) is formed by the domain of the hydrophilic polymer chain, and the matrix (constituted of the hydrophobic polymer component) is formed by the hydrophobic polymer chain.

Subsequently, the hydrophobic polymer component of the block copolymer is crosslinked. The method of crosslinking the block copolymer is not particularly limited, but a preferred example of the method is irradiation with energy rays. Examples of the energy rays include ultraviolet rays, electron rays, X-rays, α-rays, and γ-rays. Preferred are ultraviolet rays. In the case of irradiation of ultraviolet rays, the wavelength of the ultraviolet rays is about 280 to 340 nm (or 250 to 320 nm), and the quantity of the ultraviolet rays is about 25 to 75 mJ/cm².

Subsequently, the sacrificing layer is removed to obtain the self-supporting thin polymer membrane. The sacrificing layer may be removed by any method that does not impair the self-supporting thin polymer membrane of the present invention. As described above, the sacrificing layer is preferably removed using a solvent that dissolves the sacrificing layer. For example, in the case of a sacrificing layer of a polymer of which main component is poly (cellulose acetate), the sacrificing layer can be removed by immersion in a solvent such as acetone or 2-butanone.

Removal of the sacrificing layer detaches the self-supporting thin polymer membrane from the substrate. This self-supporting thin polymer membrane can be transferred to another substrate. For example, after removal of the sacrificing layer, the self-supporting thin polymer membrane immersed in a solvent such as water comes to the air-water interface. This self-supporting thin polymer membrane lying at the air-water interface can be transferred to a substrate by skimming the self-supporting thin polymer membrane with the substrate from the bottom, i.e., from the water side. Alternatively, the self-supporting thin polymer membrane lying at the air-water interface can be transferred to a substrate by skimming the self-supporting thin polymer membrane with the substrate from the top, i. e. , from the gas phase side (Langmuir-Schaeffermethod).

### Examples

The present invention will now be specifically described with reference to examples, but is not limited thereto. Example 1.

A block copolymer was synthesized as follows.

A liquid crystalline methacrylic acid ester monomer MA (Stb) was synthesized as follows.

4-Butylbenzyl alcohol was prepared by reducing 4-butylbenzoic acid (manufactured by Tokyo Chemical Industry Co. , Ltd., special grade) by a boron trifluoride diethyl ether complex and sodium borohydride. 4-Hydroxybenzaldehyde (manufactured by Tokyo Chemical Industry Co., Ltd., special grade) and 11-bromo-1-undecanol (manufactured by Wako Pure Chemical Industries, Ltd., special grade) were condensed by a Williamson method to obtain 4-(11-hydroxyundesiloxy)benzaldehyde. The 4-butylbenzyl alcohol prepared above was brominated by hydrogen bromide, followed by a reaction with triphenyl phosphine (manufactured by Wako Pure Chemical Industries, Ltd., special grade) to obtain (4-butylbenzyl)triphenylphosphonium bromide. The resulting phosphonium salt was reacted with potassium t-butoxide to generate an ylide, and the 4-(11-hydroxyundesiloxy)benzaldehyde prepared above was added thereto to obtain 11-(4-((E)-4-butylstyryl)phenoxy)undecan-1-ol by a Wittig reaction. The resulting 11-(4-((E)-4-butylstyryl)phenoxy)undecan-1-ol was reacted with methacryloyl chloride (manufactured by Wako Pure Chemical Industries, Ltd., special grade) in methylene chloride in the presence of triethylamine (manufactured by Wako Pure Chemical Industries, Ltd., special grade) to obtain liquid crystalline methacrylic acid ester monomer (MA(Stb)).

Amacro-initiator (PEO114-BMP) was synthesized as follows.

Anionic polymerized poly(ethylene oxide) (PEO114-OH, manufactured by NOF Corporation,number-average molecular weight: 5,000) and bromoisobutyryl bromide (manufactured by Wako Pure Chemical Industries, Ltd., special grade) were reacted in tetrahydrofuran in the presence of triethylamine to obtain PEO114-BMP (macro-initiator).

A block copolymer represented by the following formula was synthesized as follows.

Under an argon atmosphere, 87 mg of the PEO114-B macro-initiator produced in the above, 492 mg of the liquid crystalline methacrylic acid ester monomer produced in the above, 17 mg of copper(I) chloride (manufactured by Wako Pure Chemical Industries, Ltd., special grade), and 50 µL of 1,1,4,7,10,10-hexamethyltriethylenetetramine (manufactured by Aldrich & Company) were dissolved in 1 mL of anisole, followed by stirring at 80°C for 22 hours. The copper complex was deactivated by exposure to air to terminate the reaction. The reaction solution was cooled to room temperature and was then diluted with chloroform. The diluted reaction solution was applied to a basic alumina column to remove the copper complex, and the solvent was evaporated. The product was subjected to solid-liquid extraction in hot hexane to remove the remaining monomers. The resulting crude product was dissolved in tetrahydrofuran again and was purified by reprecipitation in methanol. Number-average molecular weight (Mn) and polydispersity (Mw/Mn) were determined by gel permeation chromatography using polystyrene as a standard material. The Mw/Mn was 1.18.

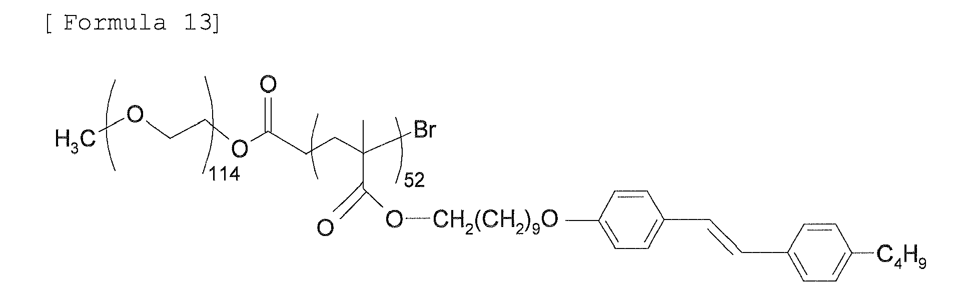

### Example 2

A solution of 1% by weight of cellulose acetate (MW: 30,000) in acetone was spin-coated onto a silicon wafer at 3,000 rpm for 60 sec to form a sacrificing layer. The resulting thin film was heated at atmospheric pressure at 60°C for 1 hour to evaporate the acetone remaining in the thin film. Subsequently, a solution of 4% by weight of the copolymer produced in Example 1 in chloroform was spin-coated onto the sacrificing layer at 2,000 rpm for 30 sec, followed by heating (annealing) in vacuum at 190°C for 2 hours to obtain a microphase-separated structure membrane.

### Example 3

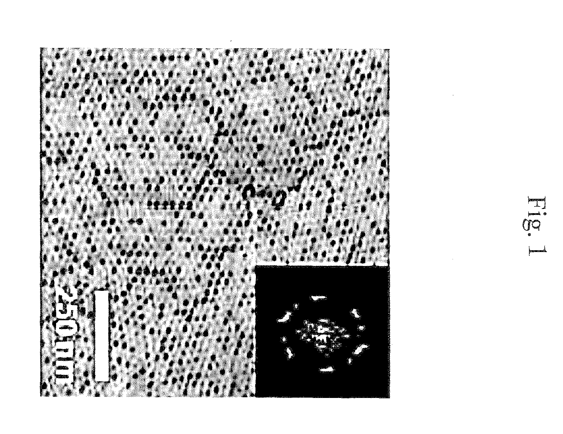

The microphase-separated structure of the thin polymer membrane prepared in Example 2 was observed for the surface structure by atomic force microscopy (AFM). Fig. 1 is a photograph showing the results of AFM. As obvious from Fig. 1, a hexagonally arrayed dot pattern derived from poly(ethylene oxide) blocks (hydrophilic polymer component) was observed on the surface of the thin polymer membrane prepared in Example 2.

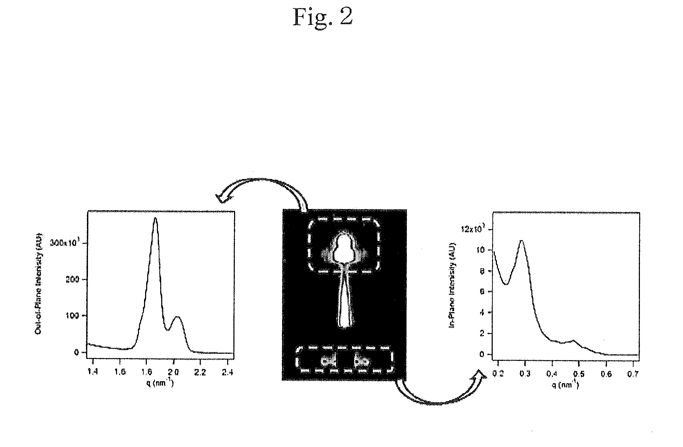

Then, the thin polymer membrane prepared in Example 2 was measured for structural periodicity by grazing-incidence small-angle X-ray scattering (GI-SAXS). The results are shown in Fig. 2. As obvious from Fig. 2, it was recognized that the poly(ethylene oxide) block (hydrophilic polymer component) cylinders in the thin polymer membrane prepared in Example 2 are hexagonally arrayed. As obvious from the results of the AFM and the GI-SAXS, it was confirmed that the thin polymer membrane prepared in Example 2 forms a microphase-separated structure also on poly(cellulose acetate).

### Example 4

In the microphase-separated structure of the thin polymer membrane prepared in Example 2, the hydrophobic polymer component portions form liquid crystal layers, and the stilbene portions are oriented in head-to-tail fashion between the liquid crystal layers. In such a case, as the photochemical reaction of the stilbene portions by ultraviolet light irradiation, a [2+2] cyclization reaction that forms a cyclobutane ring efficiently proceeds than a ring-closure reaction that forms phenanthrene through trans-to-cis isomerization. The microphase-separated thin membrane of the thin polymer membrane prepared in Example 2 was irradiated with ultraviolet light (313 nm, 5 mw/cm²) to cause photodimerization and thereby photocrosslinking of the microphase-separated thin membrane. The photodimerization of the stilbene portions was observed by ultraviolet/visible absorption (UV-Vis) spectrum and infrared (IR) spectrum. The results showed that the absorption at near 280 nm attributing to π-π* transition in the direction of the long axis of the aggregated stilbene portion decreased with the irradiation time of the ultraviolet rays in the UV-Vis spectrum, whereas in the IR spectrum, the absorption of vibrations of out-of-plane C-H bending in the carbon-carbon double bond of the trans form decreased. It was confirmed that these absorption reaches the steady states by ultraviolet-ray irradiation for 10 min (not shown).

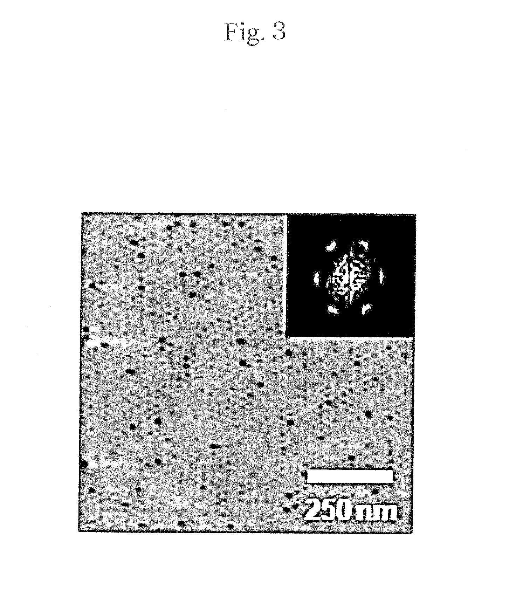

As described above, the structure of the thin polymer membrane in which crosslinking was performed by irradiation with the ultraviolet rays for 10 min was evaluated by AFM and GI-SAXS as in Example 3. Fig. 3 shows the results of AFM. As obvious from Fig. 3, hexagonally arrayed dot pattern derived from the poly(ethylene oxide) blocks (hydrophilic polymer component) was observed in the surface structure of the resulting thin polymer membrane.

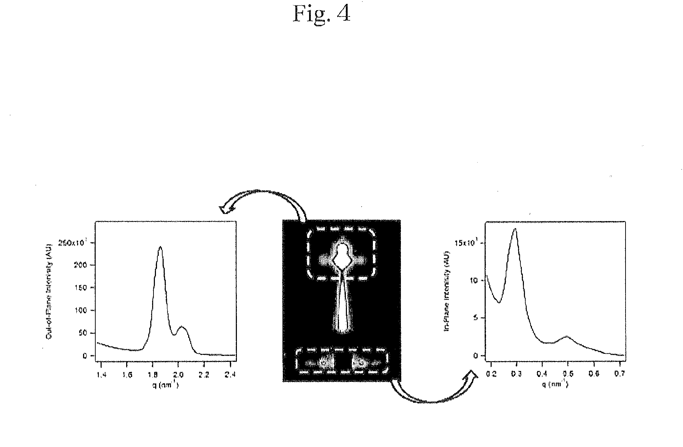

Then, the thin polymer membrane was measured for structural periodicity by grazing-incidence small-angle X-ray scattering (GI-SAXS). The results are shown in Fig. 4. As obvious from Fig. 4, it was recognized that the poly(ethylene oxide) block (hydrophilic polymer component) cylinders in the resulting thin polymer membrane were hexagonally arrayed. As obvious from the results of the AFM and the GI-SAXS, it was confirmed that the resulting thin polymer membrane maintains the microphase-separated structure even after photocrosslinking.

### Example 5

Then, the thin polymer membrane prepared as in above was immersed in acetone to elute the cellulose acetate constituting the sacrificing layer and thereby removed the sacrificing layer. In several seconds after the immersion, wrinkle-like pattern was visually confirmed in the microphase-separated thin membrane, and it was observed that the microphase-separated thin membrane was detached from the silicon wafer starting from the wrinkles with time. After immersion in acetone for several minutes, the microphase-separated thin membrane was gently taken out not to be completely detached from the silicon wafer and was immersed in water. As a result, a self-supporting thin polymer membrane having a size approximately the same as that of the silicon wafer came to the air-water interface.

### Example 6

The self-supporting thin polymer membrane prepared in Example 5 was transferred to a substrate by the following two different methods. In a first method, the self-supporting thin polymer membrane lying at the air-water interface was skimmed by a silicon wafer from the bottom, i.e., from the liquid phase side. In this case, the outermost surface of the thin membrane after the transfer corresponds to the air side (front side) of the microphase-separated thin membrane in the stage of Example 3.

In a second method, the self-supporting membrane lying at the air-water interface was skimmed by a silicon wafer from the top, i.e., from the gas phase side, that is, the method is a so-called Langmuir-Schaeffer method. In this case, the outermost surface of the thin membrane after the transfer corresponds to the sacrificing layer side (back side) of the microphase-separated thin membrane in the stage of Example 3.

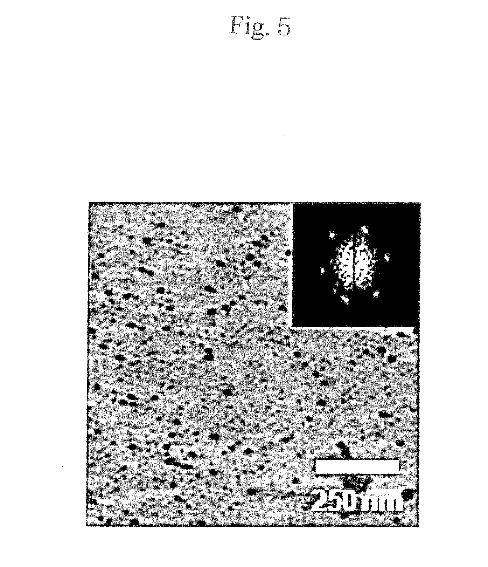

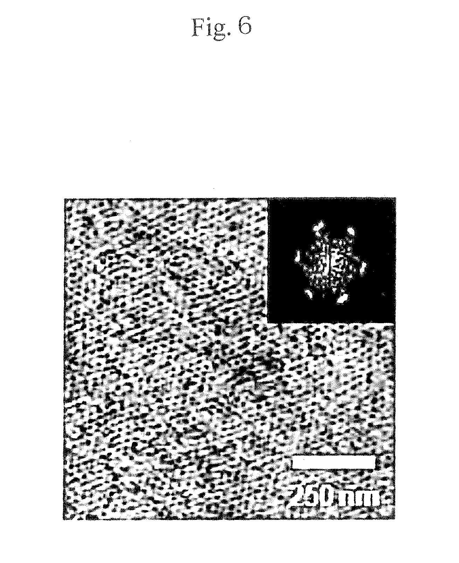

The structures of the thin membranes prepared by the two different methods as described above were evaluated by AFM and GI-SAXS as in Example 2. The results of AFM are shown in Figs. 5 and 6. Fig. 5 shows the results of the thin membrane transferred by the first method, and Fig. 6 shows the results of the thin membrane transferred by the second method. As obvious from Figs. 5 and 6, hexagonally arrayed dot patterns were observed even after transfer of the resulting self-supporting thin polymer membranes to substrates (silicon wafers).

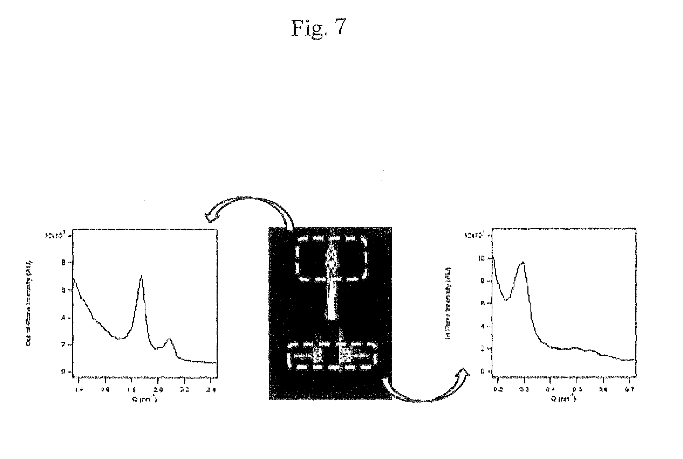

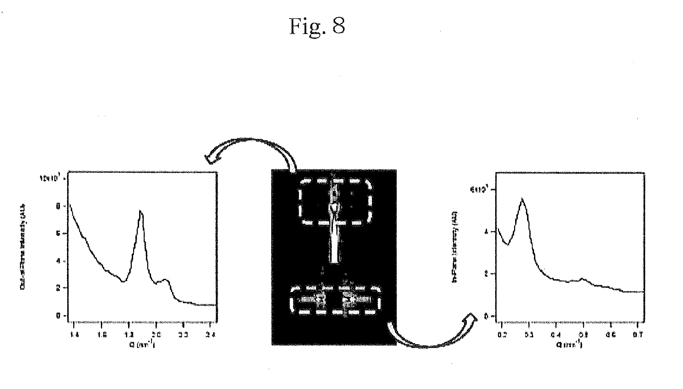

Then, the thin polymer membranes were measured for structural periodicity by grazing-incidence small-angle X-ray scattering (GI-SAXS). The results are shown in Figs. 7 and 8. Fig. 7 shows the results of the thin membrane transferred by the first method, and Fig. 8 shows the results of the thin membrane transferred by the second method. As obvious from Figs. 7 and 8, it is recognized that the poly(ethylene oxide) block (hydrophilic polymer component) cylinders in the resulting thin polymer membrane were hexagonally arrayed. As obvious from the results of the AFM and the GI-SAXS, it was confirmed that the resulting self-supporting thin polymer membrane maintains the microphase-separated structure even after transfer to another substrate.

### Example 7

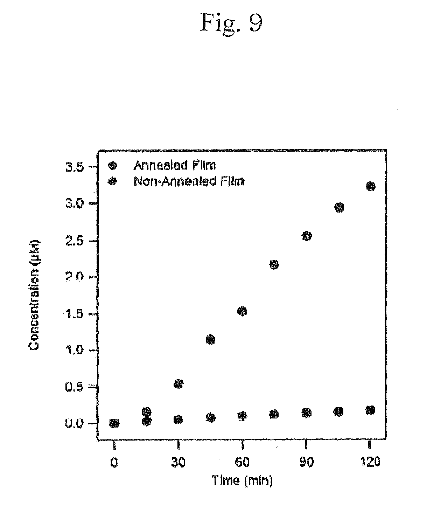

The self-supporting thin polymer membrane prepared in Example 5 was transferred onto a Cu grid for a transmission electron microscope (TEM) observation and was subjected to a permeation experiment using a methylene blue dye, which shows strong absorption in the visible region, as a probe. In the permeation experiment, two cells divided by the self-supporting thin polymer membrane were used. One cell on the feeding side and the other cell on the permeation side were filled with pure water, followed by leaving to stand for 2 hours to allow the self-supporting thin polymer membrane to swell. Subsequently, an aqueous solution of methylene blue was added to the feeding side cell at a concentration of 1.0×10⁻⁴ M. The time at this point was designated as time zero. The aqueous solution in the permeation side cell was sampled at predetermined intervals of time, and UV-Vis spectra of the samples were measured. Amounts of permeated methylene blue were converted to molar concentrations and were plotted against time. Fig. 9 shows the results.

### Comparative Example 1

A thin membrane was produced as in the above-described Examples except that photocrosslinking was not performed. In this case, the microphase-separated membrane could not maintain its shape after removal of the poly(cellulose acetate) layer serving as the sacrificing layer, and no self-supporting thin polymer membrane was therefore obtained.

### Comparative Example 2

A thin membrane was produced as in the above-described Examples except that annealing treatment was not performed. This thinmembrane was subj ected to a permeation experiment as in Example 7. Fig. 9 shows the results.

As obvious from Fig. 9, though the thin membrane in Example 7 allowed about 3.2 µM of methylene blue to permeate in 120 min, in Comparative Example 2, merely a small amount of methylene blue permeated the membrane. Thus, the permeability for methylene blue was remarkably low compared to that of the membrane in Examples.

The self-supporting thin polymer membrane of the present invention does not have physical pores but allows a material to permeate and can be therefore used as various permeable membranes, ultrafiltration membranes, and nanoreactors.

## Claims

1. A self-supporting thin polymer membrane comprising a block copolymer in which a hydrophilic polymer component and a hydrophobic polymer component having a crosslinkable structure are linked to each other by covalent bonding, wherein
the hydrophilic polymer component forms unidirectionally oriented cylinders, and the hydrophobic polymer component forms crosslinks.

2. The self-supporting thin polymer membrane according to Claim 1, wherein
the hydrophilic polymer component of the block copolymer is poly(ethylene oxide), poly(propylene oxide), poly(vinyl alcohol), poly(acrylic acid), poly(methacrylic acid), poly(acrylamide), poly(acrylate) having a hydrophilic side chain, or poly(methacrylate) having a hydrophilic side chain; and the hydrophobic polymer component is poly(acrylate) or poly(methacrylate) having a mesogenic side chain, polystyrene, or a vinyl polymer.

3. The self-supporting thin polymer membrane according to Claim 1, wherein
the block copolymer is represented by the following Formula (1): 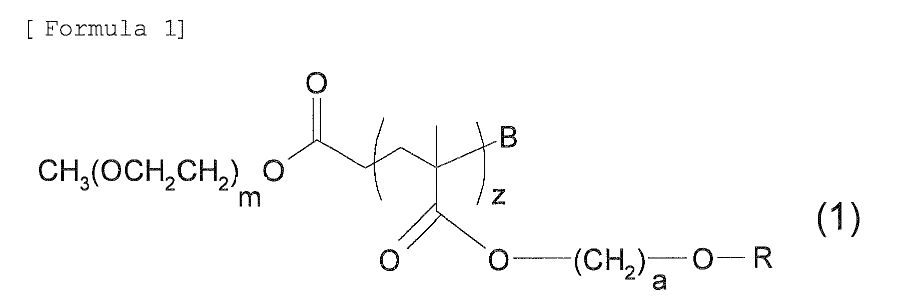 (wherein, m and z may be the same or different and are each an integer of 5 to 500; a is an integer of 4 to 30; and R represents a liquid-crystalline mesogenic chain).

4. The self-supporting thin polymer membrane according to Claim 3, wherein
the liquid-crystalline mesogenic chain is represented as follows:
E-(Y¹-F)ₙ-Y²
(wherein, E and F may be the same or different and each represent a divalent aromatic or heterocyclic group optionally having a substituent; Y¹ represents a single bond, -CH₂CH₂-, -CH₂O-, -OCH₂-, -C(=O)O-, -OC(=O)-, -C≡C-, -CH=CH-, -CF=CF-, -(CH₂)₄-, -CH₂CH₂CH₂O-, -OCH₂CH₂CH₂-, -CH=CH-CH₂CH₂-, -CH₂CH₂-CH=CH-, -N=N-, -CH=CH-C(=O)O-, or -OC(=O)-CH=CH-; n is an integer of 1 to 4; and Y² represents a hydrogen atom, a halogen, an alkyl group, an alkoxy group, a cyano group, a mercapto group, a nitro group, or an amino group).

5. The self-supporting thin polymer membrane according to Claim 3, wherein
R is a substituent represented by the following Formula (2), (3), or (4): 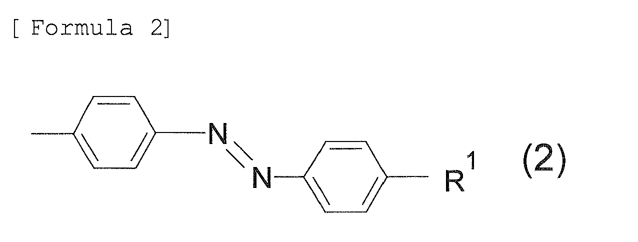 (wherein, R¹ represents a hydrogen atom or an alkyl group having 1 to 22 carbon atoms), 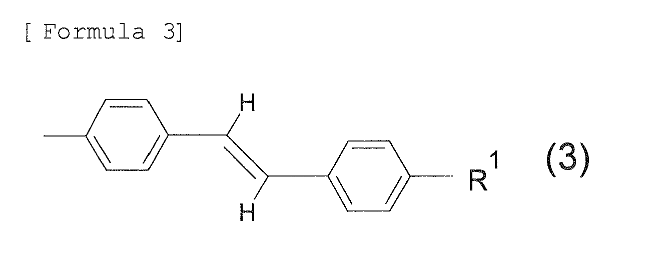 (wherein, R¹ represents a hydrogen atom or an alkyl group having 1 to 22 carbon atoms), 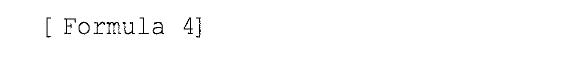 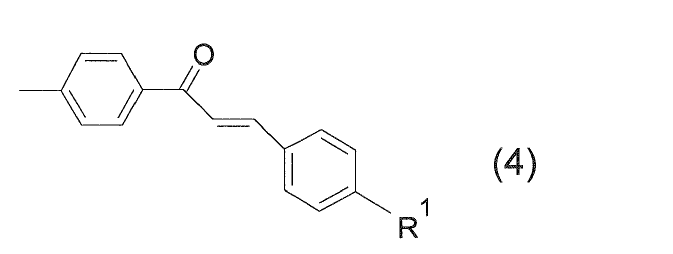 (wherein, R¹ represents a hydrogen atom or an alkyl group having 1 to 22 carbon atoms).

6. The self-supporting thin polymer membrane according to any one of Claims 1 to 5, wherein
the cylinders are oriented in a direction approximately perpendicular to a surface of the self-supporting thin polymer membrane.

7. The self-supporting thin polymer membrane according to any one of Claims 1 to 6, wherein
the cylinders have a diameter of 1 to 20 nm and are arranged at intervals of 60 nm or less.

8. A method of producing a self-supporting thin polymer membrane, comprising the steps of:
forming a sacrificing layer on a substrate;
applying a solution of a block copolymer in a solvent that can dissolve the block copolymer onto the substrate provided with the sacrificing layer thereon, wherein the block copolymer is a block copolymer in which a hydrophilic polymer component and a hydrophobic polymer component having a crosslinkable structure are linked to each other by covalent bonding;
forming a microphase-separated structure membrane of the block copolymer by evaporating the solvent;
photocrosslinking the hydrophobic polymer component of the block copolymer; and
removing the sacrificing layer.

9. The method of producing a self-supporting thin polymer membrane according to Claim 8, wherein
the hydrophilic polymer component of the block copolymer is poly(ethylene oxide), poly(propylene oxide), poly(vinyl alcohol), poly(acrylic acid), poly(methacrylic acid), poly(acrylamide), poly(acrylate) having a hydrophilic side chain, or poly(methacrylate) having a hydrophilic side chain; and the hydrophobic polymer component is poly(acrylate) or poly(methacrylate) having a mesogenic side chain, polystyrene, or a vinyl polymer.

10. The method of producing a self-supporting thin polymer membrane according to Claim 8, wherein
the block copolymer is represented by the following Formula (1): 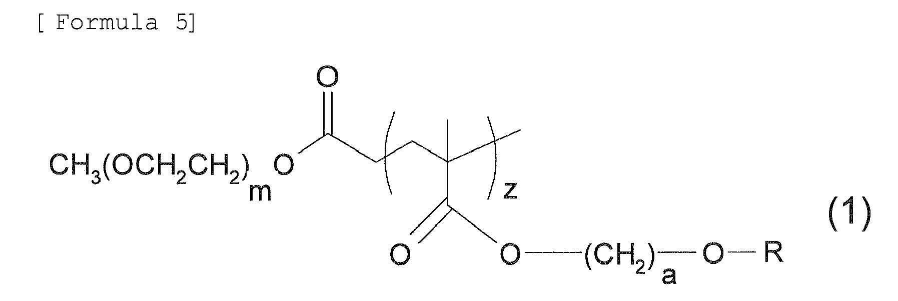 (wherein, m and z may be the same or different and are each an integer of 5 to 500; a is an integer of 4 to 30; and R represents a liquid-crystalline mesogenic chain).

11. The method of producing a self-supporting thin polymer membrane according to Claim 10, wherein
the liquid-crystalline mesogenic chain is represented as follows:
E-(Y¹-F)ₙ-Y²
(wherein, E and F may be the same or different and each represent a divalent aromatic or heterocyclic group optionally having a substituent; Y¹ represents a single bond, -CH₂CH₂-, -CH₂O- -OCH₂-, -C(=O)O-, -OC(=O)-, -C≡C-, -CH=CH-, -CF=CF-, -(CH₂)₄-, -CH₂CH₂CH₂O-, -OCH₂CH₂CH₂-, -CH=CH-CH₂CH₂-, -CH₂CH₂-CH=CH-, -N=N-, -CH=CH-C(=O)O-, or -OC(=O)-CH=CH-; n is an integer of 1 to 4; and Y² represents a hydrogen atom, a halogen, an alkyl group, an alkoxy group, a cyano group, a mercapto group, a nitro group, or an amino group).

12. The method of producing a self-supporting thin polymer membrane according to Claim 10, wherein
R is a substituent represented by the following Formula (2), (3), or (4): 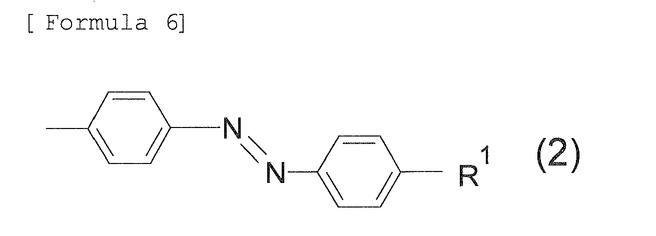 (wherein, R¹ represents a hydrogen atom or an alkyl group having 1 to 22 carbon atoms), 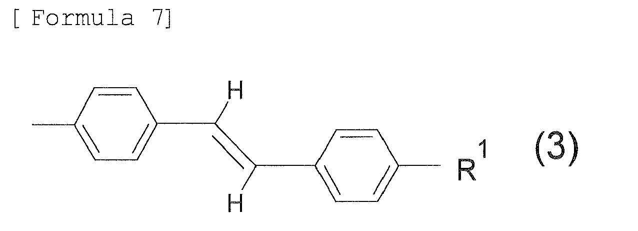 (wherein, R¹ represents a hydrogen atom or an alkyl group having 1 to 22 carbon atoms), 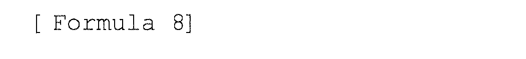 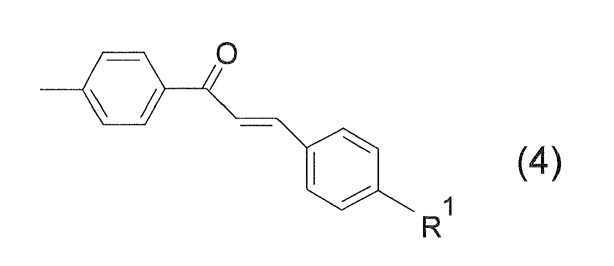 (wherein, R¹ represents a hydrogen atom or an alkyl group having 1 to 22 carbon atoms).

13. The method of producing a self-supporting thin polymer membrane according to any one of Claims 8 to 12, wherein
a main component of the sacrificing layer is a polymer that is soluble in an organic solvent, and the sacrificing layer is removed using an organic solvent.
